# EUROPEAN PATENT APPLICATION

(11) **EP 3 357 660 A1**
(43) Date of publication of application: **08.08.2018**
(21) Application number: 18153932.1
(22) Date of filing: 29.01.2018
(51) Int. Cl.: B29C 33/72, B29C 43/24, B08B 3/02, B08B 3/12

(54) **A METHOD AND A SYSTEM FOR KEEPING A CALENDER ROLL CLEAN**

(30) Priority: 06.02.2017 DK 201770067
(71) Applicant: R. Faerch Plast A/S, 7500 Holstebro (DK)
(72) Inventor: Jensen, Brian Amstrup, 7500 Holstebro (DK); Knudsen, Tommy, 7500 Holstebro (DK)
(74) Representative: Zacco Denmark A/S

(57) **Abstract**

A method for keeping a calender roll (4) clean is disclosed, which method comprises the step of humidifying the surface of the calender roll during operation of a calender (1), of which the calender roll forms part. Furthermore, a system for keeping a calender roll (4) clean by using such a method is disclosed.

## Description

The present invention relates to a method and a system for keeping a calender roll clean without stopping or interrupting the operation of the calender.

### Background of the invention

When calendering extruded plastic materials for producing plastic sheets, it is a well-known problem that different kinds of substances from the extruded material can be deposited onto one or more of the calender rolls, primarily due to the direct physical contact between the material and the calender rolls but also due to substances fuming off the hot extruded plastic melt approaching the calender. This problem is most significant on the first roll(s) met by the extruded plastic material, and the severity of the problem depends on the type of plastic material being calendered. For instance, the problem has proved to be especially severe when calendering polyethylene terephthalate (PET).

In order to maintain the quality of the produced plastic sheet, such deposits must be removed from the calender rolls. Otherwise, the build-up of deposits may be absorbed by plastic material passing the calender roll at a later stage, causing irregularities in the material of the resulting calendered plastic sheet and/or sedimentation of such deposits in forms subsequently used for thermoforming products from the extruded and calendered plastic sheet.

The cleaning is typically done by regularly washing the affected calender roll(s) manually with solvents, either during a stop of the calender or while still running. Such application of solvents onto the calender rolls, however, is detrimental to the quality of the calendered plastic sheet, which means that some of the produced plastic sheet must be ground and re-extruded. The time period passing between such necessary cleanings of the calender rolls depends, among other things, of the type of plastic material processed, but intervals of 3-6 hours are typical.

It is not uncommon that it takes 10 to 15 minutes after a such cleaning of one or more calender rolls before the production of the plastic sheet is back on the desired constant output level. Thus, the necessary cleaning of the calender rolls has a significant negative effect on the production effectivity of the calender/extruder arrangement.

### Brief description of the invention

It is an object of the present invention to provide a method for keeping a calender roll clean, so that the above-mentioned disadvantages related to the common methods used within the industry are avoided. More particularly, it is an object of the invention to provide a method for keeping a calender roll clean, which method does not affect the continuous production of the extrusion line, of which the calender rolls form part.

The present invention relates to a method for keeping a calender roll clean, which method comprises the step of humidifying the surface of the calender roll during operation of a calender, of which the calender roll forms part.

It has been proved that this method can be used for effectively keeping a calender roll clean without affecting the quality of a plastic sheet calendered by the calender during the continuously ongoing process of keeping the calender roll clean. This is rather surprising since, under less controlled circumstances, humidity on the calender rolls is otherwise known to be potentially detrimental to the quality of the calendered materials.

In an embodiment of the invention, the humidity applied onto the surface of the calender roll consists substantially of water, preferably in the form of aerosolised water.

The use of water means that no chemicals are applied onto the calender roll, which could be potentially detrimental to the quality of the calendered material. The use of aerosolised water is further advantageous, because it allows for controlling relatively accurately the amount of humidity applied to the surface of the calender roll, which is important in order to avoid compromising the quality of the calendered material.

In an embodiment of the invention, aerosolised water is obtained by means of ultrasound.

The use of ultrasound for producing aerosolised water is advantageous, because it makes it possible to obtain a water aerosol with very small droplets, which is important for keeping the quality of many calendered materials unaffected by the process according to this method.

In an embodiment of the invention, the humidity is applied onto the surface of the calender roll through a plurality of nozzles arranged along the calender roll.

The use of a plurality of nozzles makes it possible to ensure a uniform distribution of humidity along the calender roll.

In an embodiment of the invention, the width of the humidified part of the calender roll is controlled by opening and closing one or more of the nozzles.

In this way, the configuration of the system can easily be changed if the same calender is to be used for calendering materials of different widths.

In an embodiment of the invention, the nozzles can be individually, and preferably steplessly, controlled with respect to the amount of humidity supplied from the given nozzle.

This facilitates the obtaining of a uniform amount of humidity along the full width of the humidified part of the calender roll.

In an embodiment of the invention, the humidity is applied only onto the parts of the surface of the calender roll, which are in contact with the passing extruded plastic material.

Humidifying only the parts of the calender roll, which are actually in contact with the passing extruded plastic material is advantageous, because it means that moisture problems on the constantly cold end parts of the calender roll can be minimised or even avoided.

In an aspect of the invention, it relates to a system for keeping a calender clean roll by using the method described above.

In an embodiment of the invention, the system comprises a mechanism for supplying water, preferably in the form of aerosolised water, to be used for keeping the calender roll clean.

In an embodiment of the invention, the mechanism for supplying water is an ultrasonic aerosoliser.

In an embodiment of the invention, the system comprises a plurality of nozzles arranged along the calender roll for applying humidity onto the surface of the calender roll.

In an embodiment of the invention, at least some of the nozzles can be opened and closed individually, for instance for obtaining different widths of the humidified part of the calender roll.

In an embodiment of the invention, the nozzles can be individually, and preferably steplessly, controlled with respect to the amount of humidity supplied from the given nozzle.

In an embodiment of the invention, the system is arranged to apply humidity only onto the parts of the surface of the calender roll, which are in contact with the passing extruded plastic material.

### The drawings

In the following, a few exemplary embodiments of the invention are described in further detail with reference to the figures, of which
- Fig. 1: is a schematic perspective view of a calender with a system according to an embodiment of the invention, and
- Fig. 2: is a schematic side view of the calender shown in Fig. 1.

### Detailed description of the invention

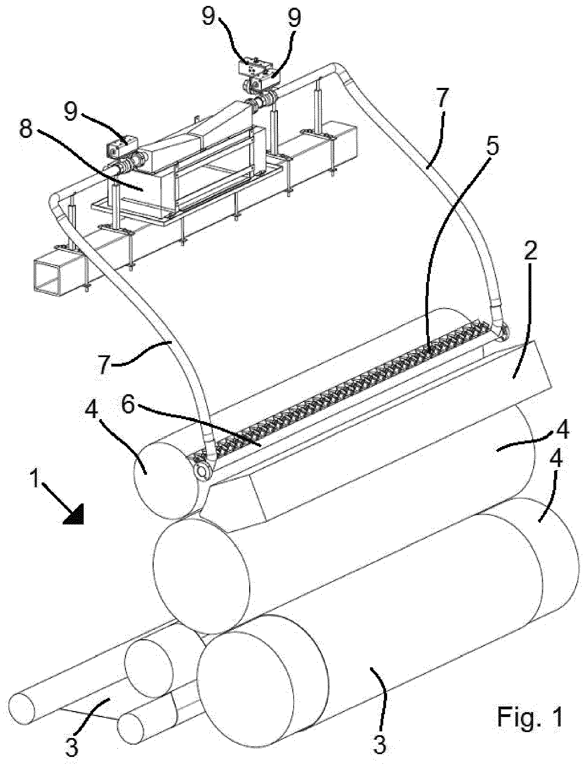

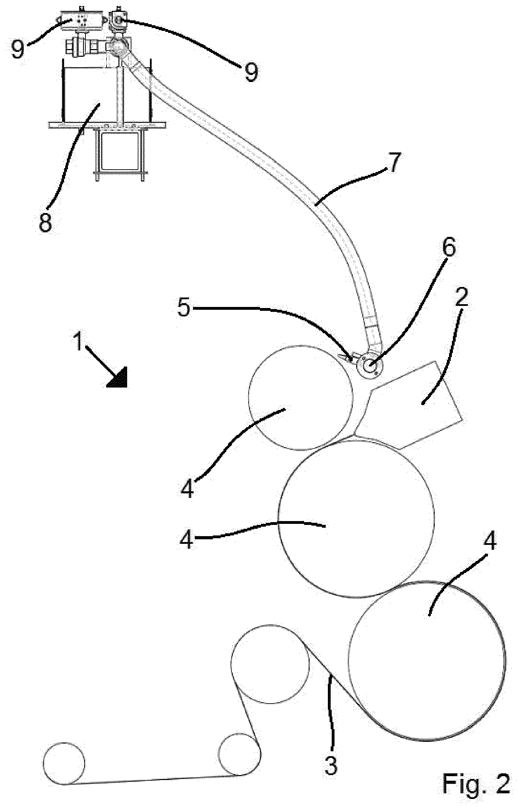

Figs. 1 and 2 are a schematic perspective view and a schematic side view, respectively, of a calender 1 with a number of calender rolls 4 and a system 5-9 for humidifying a calender roll 4 according to an embodiment of the invention. The humidity (not shown) is applied onto the surface of the uppermost calender roll 4 along at least a part of its length through a plurality of nozzles 5. These nozzles 5 are arranged along a distribution pipe 6 which is connected to an ultrasonic aerosoliser 8 through two supply pipes 7. In some embodiments of the invention, these supply pipes 7 can be at least partly constituted by hoses rather than actual pipes. The ultrasonic aerosoliser 8 supplies aerosolised water to the nozzles 5 through the two supply pipes 7 and the distribution pipe 6 for being applied onto the surface of the calender roll 4.

The figures further illustrate how, preferably, the ultrasonic aerosoliser 8 is equipped with one or more valves 9 for cleaning the humidifying nozzles 5. In a time-based cycle, the ultrasonic aerosoliser 8 stops the operation and any condensed water accumulated within the supply pipes 7, the distribution pipe 6 and/or the nozzles 5 is removed by means of vacuum controlled by these valves 9. This ensures that no water droplets can drip onto the calender roll 4, which could cause the sheet quality not to be in accordance with the requirements.

The very hot extruded plastic melt from the extruder outlet 2 enters the calender 1 through the gap between two neighbouring calender rolls 4. When, for instance, crystalline polyethylene terephthalate (CPET) is calendered, the temperature of the plastic melt reaching the calender 1 is typically about 280 °C. The temperature of the calender rolls 4, which are cooled from the inside by water, is around ambient temperature, i.e. about 20 °C.

It is a well-known problem that water on the surface of the calender roll 4 may compromise the quality of the calendered plastic sheet. This is typically especially a problem near the ends of the calender roll 4, which are not covered by extruded plastic material 3 and, therefore, stay cold throughout the continuous calendering process. Under conditions, in which the dew point is high (for instance in the summer time when the humidity of the air is often increased), condensation onto the cold parts of the cooled calender roll 4 may cause formation of significant amounts of water. This water can influence the so-called "melt bank" of piled-up melt at the entrance to the calender 1, which can be detrimental to the quality of the calendered plastic sheet, resulting, for instance, in holes in the calendered plastic sheet.

It has been proven, however, that application of a controlled amount of humidity onto the surface of the calender roll 4 calender be used for keeping the calender roll 4 clean of substances being deposited thereon without compromising the quality of the calendered material. This means that a continuous production can be upheld simultaneous with the ongoing process according to the present invention, which results in a number of advantages.

First and foremost, the fact that none of the produced plastic sheet must be ground and re-extruded due to washing of the calender roll 4 with solvents as described above results in an increase of the production of an extruder/calender arrangement of up to 10-15 %.

Secondly, this solution enables for working at a stable and relatively high temperature of the calender roll 4, which not only reduces or even eliminates any problems related to humidity/condensation at the constantly cooled end parts of the calender rolls 5, but also reduces the costs for the cooling system significantly.

In the illustrated embodiment, the nozzles 5 apply humidity to the calender roll 4 close to the top side thereof, the humidity rotates with the calender roll 4 until it meets the extruded melt entering the gap between this uppermost calender roll 4 and the neighbouring midmost calender roll 4.

Nozzles 5, which enable an accurate adjustment of the amount and location of the applied humidity, are commercially available. By using nozzle 5, which can be opened and closed individually, it is easy to ensure that only the part of the calender roll 4, which is in contact with the extruded plastic material 3, is humidified. Preferably, the nozzles 5 can also be individually and steplessly controlled with respect to the amount of humidity supplied from the given nozzle 5. In this way, it is possible to obtain a uniform amount of humidity along the full width of the humidified part of the calender roll 4, even though the temperature of the surface of the calender roll 4 often differs slightly along the longitudinal axis thereof and the pressure within the distribution pipe 6 supplying the humidity to the nozzles 5 may also vary along the calender roll 4.

When the humidity meets the very hot plastic melt, it is instantaneously heated to about 280 °C and evaporates explosively, which prevents the depositing of any substances onto the surface of the calender roll 4.

Measurements have shown that, with a correct amount of humidity (which depends on the type and temperature of the extruded material 3), the use of such a process results in a decrease of the temperature of the extruded material 3 of about 1 °C, which is of absolutely no significance for the quality of the produced plastic sheet.

Preferably, the humidity consists of aerosolised water with very small droplets, which can, for instance be obtained by means of an ultrasonic aerosoliser 8, but also cooled water steam can be used. It is important to avoid too large droplets within the humidity applied onto the surface of the calender roll 4, as the presence of such large droplets can cause flecks within the produced plastic sheet and furthermore complicates the process of controlling the amount of humidity applied onto the calender roll 4, significantly. A great advantage of the method and system according to the invention is that the calender roll 4 can be kept clean without the use of any potentially harmful chemicals.

### List of reference numbers

- 1.: Calender
- 2.: Extruder outlet
- 3.: Extruded material
- 4.: Calender roll
- 5.: Nozzle
- 6.: Distribution pipe
- 7.: Supply pipe
- 8.: Ultrasonic aerosoliser
- 9.: Valves for cleaning nozzles

## Claims

1. A method for keeping a calender roll (4) clean, which method comprises the step of humidifying the surface of the calender roll during operation of a calender (1), of which the calender roll forms part.

2. The method according to claim 1, wherein the humidity applied onto the surface of the calender roll consists substantially of water, preferably in the form of aerosolised water.

3. The method according to claim 2, wherein aerosolised water is obtained by means of ultrasound.

4. The method according to any of the preceding claims, wherein the humidity is applied onto the surface of the calender roll through a plurality of nozzles (5) arranged along the calender roll.

5. The method according to claim 4, wherein the width of the humidified part of the calender roll is controlled by opening and closing one or more of the nozzles.

6. The method according to claim 4 or 5, wherein the nozzles can be individually, and preferably steplessly, controlled with respect to the amount of humidity supplied from the given nozzle

7. The method according to any of the preceding claims, wherein the humidity is applied only onto the parts of the surface of the calender roll, which are in contact with the passing extruded plastic material.

8. A system for keeping a calender roll (4) clean by using the method according to any of the preceding claims.

9. The system according to claim 8, comprising a mechanism for supplying water, preferably in the form of aerosolised water to be used for keeping the calender roll clean.

10. The system according to claim 9, wherein the mechanism for supplying water is an ultrasonic aerosoliser (8).

11. The system according to any of claims 8-10, comprising a plurality of nozzles (5) arranged along the calender roll for applying humidity onto the surface of the calender roll.

12. The system according to claim 11, wherein at least some of the nozzles can be opened and closed individually, for instance for obtaining different widths of the humidified part of the calender roll.

13. The system according to claim 11 or 12, wherein the nozzles can be individually, and preferably steplessly, controlled with respect to the amount of humidity supplied from the given nozzle.

14. The system according to any of claims 8-13, which is arranged to apply humidity only onto the parts of the surface of the calender roll, which are in contact with the passing extruded plastic material.
